# EUROPÄISCHE PATENTSCHRIFT

(11) **EP 0 813 474 B1**
(45) Veröffentlichungstag und Bekanntmachung des Hinweises auf die Patenterteilung: **28.07.1999**
(21) Anmeldenummer: 96907372.5
(22) Anmeldetag: 07.03.1996
(51) Int. Cl.: B32B 27/12, B32B 5/26, A63B 41/08, A43B 23/02, D06N 3/00

(54) **VERBUNDSTOFF ZUR HERSTELLUNG VON SPORTBÄLLEN ODER SCHUHEN**
COMPOSITE FOR PRODUCING SPORTS BALLS OR SHOES
MATERIAU COMPOSITE POUR LA FABRICATION DE BALLONS DE SPORT OU DE CHAUSSURES

(30) Priorität: 08.03.1995 DE 19508158
(43) Veröffentlichungstag der Anmeldung: 29.12.1997
(73) Patentinhaber: NABINGER, Udo, D-67468 Frankenstein (DE)
(72) Erfinder: NABINGER, Udo, D-67468 Frankenstein (DE)
(74) Vertreter: Patentanwälte Möll und Bitterich
(86) Internationale Anmeldenummer: EP9600958
(87) Internationale Veröffentlichungsnummer: WO9627497

(56) Entgegenhaltungen:
- DE-A- 2 746 522
- DE-A- 2 938 679
- DE-A- 3 111 340
- DE-A- 3 313 681
- DE-A- 4 339 677
- GB-A- 2 065 554
- DATABASE WPI Section Ch, Week 8750 Derwent Publications Ltd., London, GB; Class A82, AN 87-349137 XP002006184 & DD,A,248 157 (VEB VOGTLAND KUNSTL:) , 29.Juli 1987

## Beschreibung

Die Erfindung betrifft mehrlagige Verbundstoffe, insbesondere zur Herstellung von Sportbällen oder Schuhen, umfassend eine erste, äußerste, abriebfeste Schicht aus einem Kunststoff, darunter eine zweite Schicht aus einem für die Formbeständigkeit und Reißfestigkeit verantwortlichen Textil und gegebenenfalls eine dritte, unterste Schicht, ebenfalls aus einem Textil.

Aus der DE-A-43 39 677 sind Verbundstoffe bekannt, bei denen eine äußere, abriebfeste Kunststoffschicht mit einer zweiten Schicht aus Gewebematerial und mit einer dritten, innersten Schicht aus einem Vlies verbunden ist. Die Kettfäden und Schußfäden des Gewebes bestehen aus identischen Materialien. Dadurch hat das Gewebe in Richtung der Schußfäden und in Richtung der Kettfäden gleiche Festigkeit und Dehnbarkeit. In diagonaler Richtung sind Festigkeit und Dehnbarkeit geringer, da sich das Gewebe in dieser Richtung stärker verformen läßt.

Aus der DE-A-29 38 679 ist ein mehrlagiger Verbundstoff bekannt, der aus einer äußeren Kunststoffhülle, einer zweiten Schicht aus Spaltleder oder Vlies und einer dritten, innersten Schicht aus Textil besteht. Das Vlies ist ein Stapelfaservlies mit kurzen Fasern. Stapelfaservliese besitzen ein vergleichsweise hohes Flächengewicht und hohe Dämpfungswerte, jedoch nur geringe Zugfestigkeit.

Die DE-A-27 46 522 offenbart dünne Silikonkautschukfolien mit eingelagerten Spinnfaservliesen. Da die fertige Silikonkautschukfolie sowohl warm als auch kalt verformbar sein soll, müssen die Vliesfasern frei beweglich sein. Dies wird dadurch erreicht, daß die Zwischenräume zwischen den Vliesfasern vollständig durch Silikonkautschukmasse ausgefüllt sind.

Spinnfaservliese sind seit längerer Zeit bekannt. Sie werden im Fahrzeugbau, zur Teppichherstellung, im Hoch- und Tiefbau, in der Filtertechnik, in der Elektronikindustrie, bei der Tapetenherstellung, im Garten, im Gartenbau und in der Landwirtschaft eingesetzt. Solche Spinnfaservliese werden hergestellt, indem man faserbildende Kunststoffe, beispielsweise aus Polyamid, Polyester, Polyolefinen, PVC oder Polystyrol, verspinnt und die dünnen Fäden endlos in Wirrlage ablegt. Anschließend werden die Schichten verfestigt, indem entweder durch Druck und Wärme eine Verschweißung der Kreuzungspunkte der Fäden oder durch Aufsprühen einer Bindemittellösung eine Verklebung derselben herbeigeführt wird. Man vergleiche DE 13 03 891 B 1.

Die Verwendung von mehrlagigen Verbundstoffen für die Herstellung von Sportbällen ist bekannt. Man vergleiche DE 27 23 625 C 2, DE-U-18 72 725, DE 24 56 071 A 1, DE-U-75 02 670, EP 0 305 595 A 1, DE-U-82 07 404 oder DE 29 50 620 A 1. Das wesentliche Problem bei den unter Verwendung der bekannten Verbundstoffe hergestellten Sportbällen besteht darin, daß die Hülle ihre nötige Formstabilität nicht erreicht. Ein derartiger Ball weist keine perfekte, gleichmäßige Rundung auf. Ein auf Präzision gearbeiteter Ball wird mit der Zeit instabil und verliert seine Rundung. Der Grund liegt in einer unzureichenden Zugstabilität der textilen Verstärkungsschichten, insbesondere bei Verwendung von Vliesen und Filzen, und in der Richtungsabhängigkeit der Dehnung, insbesondere bei Verwendung von Geweben.

Nach dem Stand der Technik ist es daher erforderlich, mehrere Lagen von Geweben, z. B. aus Baumwolle, Viskose, Polyamid oder Polyester, zu verwenden, wobei die Einzelgewebe aufwendig im Winkel zueinander verlegt werden müssen, um die multidirektionale Stabilität zu erreichen. Alternativ dazu muß dem Gewebe eine spezielle Atlasbindung gegeben werden, um es in sich zu verfestigen. Die ideale isotrope Dehnung der Stütz- und Verfestigungsschichten läßt sich aber auch auf diese Weise nicht erreichen.

Der vorliegenden Erfindung liegt die Aufgabe zugrunde, einen mehrlagigen Verbundstoff mit einer optimalen isotropen Dehnung und Reißfestigkeit anzugeben, mit dem Sportbälle, die aus mehreren Stücken zusammengenäht oder -geschweißt sind, bei dem vorgesehenen Innendruck der Gummiblase eine genaue kugelförmige Rundung erreichen, auch bei starker Beanspruchung nicht instabil werden und dabei gleichzeitig eine dauerhafte weiche Sprungelastizität aufweisen.

Diese Aufgabe wird dadurch gelöst, daß die zweite Schicht ein Spinnfaservlies ist, dessen Faserlagen in sich verfestigt sind und das nach allen Richtungen eine gleichmäßige Dehnung und Reißfestigkeit aufweist.

Durch die nach allen Richtungen gleichmäßig geringe Dehnung und hohe Reißfestigkeit des erfindungsgemäß hergestellten Spinnfaservlieses der zweiten Schicht kann sich eine damit hergestellte Ballhülle während des Aufpumpens kontrolliert und absolut gleichmäßig dehnen. Die Rundung und Präzision der Bälle wird durch dieses Korsett absolut formstabil gehalten. Die äußerste Schicht hat keine Möglichkeit, sich ungleichmäßig auszudehnen oder sich zu verziehen.

Ein weiterer Vorteil der erfindungsgemäßen Verbundstoffe liegt darin, daß sie leicht verarbeitet werden können, da das Material kantensauber geschnitten und vernäht werden kann.

Besonders wirkungsvoll und daher besonders bevorzugt ist eine Verfestigung der Spinnfaservliesschicht durch Heißvulkanisation mit Latex. Bei der Vulkanisation entsteht der gegen Hitze und Kälte sehr widerstandsfähige Weichgummi. Der Latex wird bei ca. 140 °C mit dem Spinnfaservlies vulkanisiert. Die Vulkanisationstemperatur von 140 °C sollte nicht überschritten werden, da ansonsten die Qualität des Substrates verloren geht. Das Vlies würde hart und spröde.

Die Heißvulkanisation bietet die vorteilhafte Möglichkeit, je nach Bedarf und Anforderung unterschiedliche Elastizitätswerte und Härtegrade einzustellen. Auch läßt sich das Vliesmaterial in der Farbe Weiß oder in hellen Farbtönen vulkanisieren. Der Latex setzt sich bei der Vulkanisation verstärkt an den Fasern und den Faserkreuzungen an. Dadurch bleibt das Substrat hervorragend offenporig und weist eine starke Atmungsaktivität auf.

Bei der Heißvulkanisation werden die aus Isopren bestehenden kettenförmigen Moleküle durch Schwefelbrücken miteinander vernetzt. Ein so vulkanisiertes Material weist eine besondere Elastizität, Viskosität und erstklassige Reflexe auf, so daß damit hergestellte Sportbälle ein perfektes, erstklassiges Sprungverhalten besitzen. Das Besondere dabei ist, daß der Spieler einen optimal weichen Ballkontakt halten kann und daß der Ball nicht unkontrolliert wegspringt. Gleichzeitig weist der Ball eine extrem schnelle Beschleunigung auf.

Ein weiterer Vorteil ist darin zu sehen, daß das vulkanisierte Spinnfaservlies bei hohen und bei tiefen Temperaturen seine ursprüngliche Elastizität beibehält, und zwar auch über Jahre hinweg ohne Verhärtung des Synthese-Obermaterials.

Die sich in jedem Latex befindenden Emulgatoren, die den Latex beim Transport flüssig halten, wirken üblicherweise wie eine Seife und ziehen Luftfeuchtigkeit an, so daß das Vliessubstrat von Feuchtigkeit benetzt wird. Bei der erfindungsgemäßen Heißvulkanisation jedoch werden diese Emulgatoren so im Vlies eingeschlossen, daß sie auch bei Dehnung und Stauchung nicht mehr frei werden. Das Vlies wird von Feuchtigkeit nicht angenetzt. Hydrophobierungsmittel, mit denen das Vlies ausgerüstet ist, behalten jetzt ihre Wirkung.

In einem Versuch wurden zwei identische Vliessubstrate verglichen. Das eine Vliessubstrat war selbstvernetzt, das andere mit Latex heißvulkanisiert. Beide Substrate wurden ausgewaschen und mit derselben Hydrophobierung ausgerüstet. Nach Eintauchen in Wasser saugte sich das selbstvernetzte Substrat schnell mit Wasser voll. Das vulkanisierte Substrat dagegen zeigte keine Annetzung von Feuchtigkeit.

Aufgrund der positiven Eigenschaften läßt sich das vulkanisierte Material auch als Schuhmaterial einsetzen. Es gewährleistet eine dauerhafte Biege-, Reiß- und Stauchfestigkeit, verbunden mit einer hervorragenden Geschmeidigkeit und Elastizität, sowie aufgrund der Offenporigkeit eine erstklassige Atmungsaktivität.

Bei der Verwendung als Schuhmaterial kann die abriebfeste äußerste Schicht entweder aus einem geschlossenen Film oder aus einem porösen, durchlässigen Film bestehen, überwiegend auf der Basis von PU.

Des weiteren kann ein erfindungsgemäß vulkanisiertes Vliessubstrat ohne Beschichtung der Oberseite als Besatzmaterial bei Schuhen mit Velouroptik eingesetzt zu werden, da es eine sehr hohe Abriebfestigkeit aufweist.

Als weiterer Anwendungsbereich kann ein erfindungsgemäßer Verbundstoff, ebenfalls mit Velouroptik, für sprunggedämpfte Hallenbälle zur Anwendung kommen, wobei das Spinnfaservlies auf der Rückseite kaschiert sein kann.

Als Alternative zur Heißvulkanisation mit Latex ist auch eine Koagulation unter Verwendung von PU oder Latex möglich, auch wenn ein solcher Verbundstoff nicht dieselben hervorragenden Werte erreicht. Die Koagulation erfolgt bei Temperaturen zwischen 37 °C und 65 °C. Diese Werte sind deutlich niedriger als die 140 °C der Heißvulkanisation.

Schließlich besteht auch noch die Möglichkeit, das Spinnfaservlies mit Schaum, z. B. High-Solit-PU-Schaum oder mit PVC-Schaum auszuschäumen bzw. das Vlies mit diesen Schäumen zu beschichten, um so die isotropen Eigenschaften zu erzielen. Die so hergestellten Verbundstoffe erreichen jedoch noch weniger die hervorragenden Eigenschaften der heißvulkanisierten Spinnfaservliese.

Vorzugsweise besitzt die zweite Schicht eine Längs- und Querreißfestigkeit von 10 bis 1000 N/5 cm und besteht aus Fasern von Polyester, Viskosepolyester, Polyamid oder deren Copolymeren mit anderen Kunststoffen.

Gemäß einer vorteilhaften Weiterbildung der Erfindung ist auf die Oberseite und/oder Unterseite der zweiten Schicht eine Schicht aus Stapelfasern aufgenadelt. Die Stapelfaserschicht auf der Oberseite des Spinnfaservlieses kann dünn (0,2 - 1 mm), auf der Unterseite dick (1 - 5 mm) sein. Durch das Aufnadeln von Stapelfasern lassen sich die mechanischen Eigenschaften des Spinnfaservlieses gezielt verändern. Das Vlies kann bei Bedarf auch gespalten werden. Die Weiterverarbeitung bleibt unverändert.

Als weitere Möglichkeit kann auch ein Vliesstoff Verwendung finden, welcher nach Art eines Spinnfaservlieses mit Endlosfasern gebildet wird und dann in einer höheren Grammage vernadelt/verfestigt und gegebenenfalls bei Bedarf gespalten wird.

Um die Wasseraufnahme des Verbundstoffes zu reduzieren, ist die zweite Schicht zusätzlich hydrophobiert. Als Hydrophobierungsmittel kommen in Betracht Aluminium- oder Zirkoniumsalze, höhere Fettsäuren, fettsäuremodifizierte Melamine sowie bevorzugt Silikone, Fluorsilikone oder Fluorcarbonharze.

Gemäß einer Weiterbildung der Erfindung ist unter der zweiten Schicht eine innerste Schicht aus einem Stapelfaservliesmaterial vorgesehen. Diese besteht bevorzugt aus Mikrofaservliesstoffen, koagulierten Vliesstoffen, poromerischen Vliesstoffen, Polyestervliesstoffen, Polyamidvliesstoffen, Filzen, Lederfaserstoffen, Glasfaservliesstoffen oder aus Synthesekeramikfaservliesen.

Vorteilhafterweise ist auch die innerste Schicht hydrophobiert, wobei das Hydrophobierungsmittel aus den oben erwähnten Substanzen auszuwählen ist.

Eine erste bevorzugte Anwendung des erfindungsgemäßen Verbundstoffes ist die Hülle von Sportbällen. Hierzu wird auf das Spinnfaservlies außen eine abriebfeste Kunststoffschicht aus Polyurethan, Silikonkautschuk, Polyvinylchlorid, Polyethylen, Polypropylen, Polyacrylat oder aus Gummi-Latex aufgetragen. Die äußerste Schicht ist für das Aussehen und die Abriebfestigkeit verantwortlich, die Schicht aus dem verfestigten Spinnfaservlies dagegen für die isotrope Dehnung und Reißfestigkeit. Die Spinnfaservliesschicht verhindert auch örtliche Überdehnungen der äußersten Schicht und damit deren Reißen.

Wird die äußerste Schicht in plastischer Form direkt auf die zweite Schicht aufgetragen, so erreicht man eine innige Verbindung zwischen den beiden Schichten. So gefertigte Bälle können mit höherem Druck aufgepumpt werden, ohne Schaden zu erleiden. Die Nahtstellen der Bälle halten überdurchschnittlich lange Zeit und reißen nicht aus. Durch die isotrope Dehnung des Spinnfaservlieses können die Bälle sich nicht verziehen und unrund werden. Gleichzeitig bietet der Spinnfaservliesstoff die

Möglichkeit, das bei Sportbällen benötigte Verstärkungslaminat auf der Innenseite der Bälle, welches üblicherweise aus einem Gewebe besteht, durch das Spinnfaservlies ganz oder teilweise zu ersetzen. Alternativ läßt sich das Spinnfaservlies aber auch mit Gewebe oder Wirkware kombinieren.

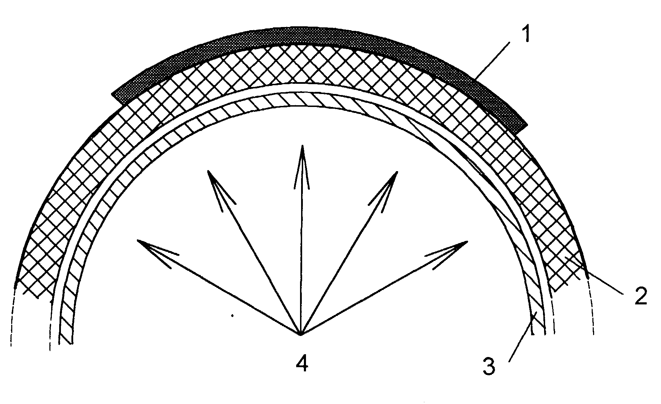

Anhand der Zeichnung soll die Erfindung in Form eines Ausführungsbeispiels näher erläutert werden.

Die Zeichnung zeigt ausschnittsweise einen Querschnitt durch einen Sportball. Unter einer äußersten Schicht 1 aus einem abriebfesten Material, z. B. auf der Basis von Polyurethan, ist eine zweite Schicht 2 aus einem Spinnfaservlies vorgesehen. Die zweite Schicht 2 besitzt multidirektional eine isotrope Dehnung und Reißfestigkeit. Sie nimmt die von der aufgeblasenen Gummiblase 4 erzeugten Druckspannungen allseits gleichmäßig auf. Dadurch bleibt der Ball rund und formstabil. Das Spinnfaservlies kann aus den verschiedensten Materialien hergestellt sein, beispielsweise aus Polyester, Viskosepolyester, Polyamid, Copolymeren mit anderen Kunststoffen und dergleichen. Die Reißfestigkeit sollte in der Größenordnung von 10 bis 1000 N/5 cm liegen.

Die besten Eigenschaften haben Spinnfaservliese, die durch Heißvulkanisation mit Latex verfestigt sind.

Unter der Spinnfaservliesschicht 2 befindet sich eine innerste Schicht 3. Diese besteht aus weichen und unstabilen, d.h. nicht in sich verfestigten Stapelfaservliesstoffen. Die Schicht 3 hat die Aufgabe, die gewünschte Sprungdämpfung und das gewünschte Gewicht des Balles zu erzeugen. Auch verbessert sie die Spieleigenschaften, insbesondere das Ballgefühl und die Ballführung.

Die innerste Schicht 3 besteht aus kurzfaserigen Vliesmaterialien, bevorzugt aus der Gruppe der Mikrofaservliesstoffe, koagulierten Vliesstoffe, poromerischen Vliesstoffe, Polyestervliesstoffe, Polyamidvliesstoffe, Filze, Lederfaserstoffe, Glasfaservliesstoffe und der Synthesekeramikfaservliese.

Die zweite Schicht 2 und die dritte Schicht 3 können miteinander verklebt werden, beispielsweise mit Hilfe eines PU-Klebers oder mittels eines Schmelzklebers. Bei geeigneten Materialien können sie auch verschweißt werden. Bei Anwendung eines Gummiklebers lassen sie sich vulkanisieren.

Zum Verbinden von Spinnfaservlies 2 und Kurzfaservlies 3 wird bevorzugt eine Emulsion aus einem Natur- oder Synthesekautschuk benutzt, welche ein Hydrophobierungsmittel auf der Basis von Silikon oder Fluorcarbon und gegebenenfalls einen Haftvermittler auf der Basis von Urethan oder Acrylat enthält. Diese Emulsion bewirkt beim Eintrocknen und Vulkanisieren, gegebenenfalls durch Selbstvernetzung, eine feste Bindung an den Faserkontaktstellen, ohne die Porosität und Gadurchlässigkeit wesentlich zu reduzieren. Die Hydrophobierungsmittel, die in den Kautschuk eingebunden werden, schützen im gleichen Arbeitsgang die Vliese 2, 3 gegen das Eindringen von flüssigem Wasser. Überraschenderweise läßt sich das so vorbehandelte Material trotz Hydrophobierung noch mit der äußersten Polyurethanschicht 1 und gegebenenfalls mit weiteren Verstärkungs- oder Beschwerungsgeweben oder -folien verkleben. Das fertige Material besitzt eine gute Elastizität auch bei Kälte.

Es ist des weiteren möglich, die Stapelfasern, aus denen die Vliesschicht 3 gebildet würde, direkt mit dem Spinnfaservlies zu vernadeln. Dieses Kompositvlies kann genauso weiterverarbeitet werden wie beschrieben.

Bei der Herstellung des Verbundstoffes hat es sich als vorteilhaft erwiesen, zunächst die Spinnfaservliesschicht 2 und die innere Vliesschicht 3 miteinander zu verbinden und danach die äußerste Kunststoffschicht 1 aufzubringen. Die äußere Kunststoffschicht 1 kann entweder als härtbare Dispersion auf der Basis wäßriger Polyurethane, zweikomponentiger Polyurethane oder Polyurethane auf High-Solit-Basis aufgebracht werden oder als thermoplastisches Pulver oder als vorfabrizierte Folie. Die Verfestigung erfolgt durch Einwirkung von Wärme, beispielsweise in einem Schmelzofen oder mittels Infrarotstrahlung. Dabei dringt der Kunststoff in die zweite Schicht 2 ein, wodurch eine besonders feste Verbindung erreicht wird. Entsprechende Techniken sind für die Herstellung anderer Verbundwerkstoffe bekannt.

Wird das Spinnfaservlies mit Stapelfasern vernadelt, so sollte auf die Oberseite eine dünne (0,2 - 1 mm) und auf die Unterseite eine dicke (1 - 5 mm) Schicht aus Stapelfasern aufgenadelt werden, wenn daraus Sportbälle hergestellt werden. Dieser Schichtverbund wird wie beschrieben mit der Kautschuk-Hydrophobierungs-Emulsion getränkt (20 - 40 Gew.%) und im Ofen vulkanisiert. Oberflächliche Rauhigkeiten werden abgeschliffen. Zum Schluß wird dann die abriebfeste Kunststoffschicht 1 aufgebracht.

Das Eindringen von Feuchtigkeit durch die Nähte oder auch durch die Poren der Deckschicht der mit dem erfindungsgemäßen Verbundmaterial hergestellten Produkte, welche sich kapillar in den Vliesschichten verteilen könnte, wird durch die Hydrophobierung der Vliesmaterialien verhindert. Das Material wird dadurch 100 % wasserdicht und nimmt auch bei Nässe nicht an Gewicht zu.

Die Hydrophobierungsmittel können entweder vor oder nach dem Fertigstellen des Verbundstoffes aufgebracht werden. Eine vorherige Imprägnierung erweist sich als vorteilhaft, wenn das Hydrophobierungsmittel ein Lösungsmittel enthält, welches die äußere Schicht 1 anlösen würde. Eine nachträgliche Imprägnierung ist notwendig, wenn das Hydrophobierungsmittel die Haftung zwischen äußerer Kunststoffschicht 1, Spinnfaservliesschicht 2 und/oder innerer Vliesschicht 3 beeinträchtigen würde. In solchen Fällen können auch geeignete Haftvermittler eingesetzt werden. Da die Hydrophobierungsmittel die Poren der Vliese 2, 3 nicht ausfüllen, sondern nur die Fasern dünn überziehen, bleibt das fertige Material gasdurchlässig und atmungsaktiv.

Aus diesem Grund kann das Material auch bei der Herstellung von Schuhen eingesetzt werden, insbesondere als Schuhobermaterial. Sollte dabei die mit dem erfindungsgemäßen Material erreichbare extrem geringe isotrope Dehnung von Nachteil sein und eine größere Dehnung gewünscht werden, muß das Material speziell zweischichtig aufgebaut werden. Dies gilt auch für preiswerte Sportbälle, bei denen größere Dehnungen und Toleranzen in Kauf genommen werden können. Der erfindungsgemäße Effekt und die wirkungsvollen Eigenschaften eines solchen zweischichtigen Materials werden durch die Latex-Bindung der Fasern in Verbindung mit der Heißvulkanisation und gegebenenfalls Hydrophobierung gewährleistet.

Bei einem Material mit einem solchen zweischichtigen Aufbau, bestehend aus einem Stapelfaservlies und einer Beschichtung, wurden folgende Werte für die Zugfestigkeit und Dehnung ermittelt (in Anlehnung an DIN 53328):

| | | | % Dehnung bei: | | | | |
|---|---|---|---|---|---|---|---|
| | N/20 mm | % Dehn. | 50N | 100 N | 150 N | 200N | 250N |
| Richtung a | 276 | 66 | 8,5 | 19,7 | 31,2 | 41,5 | 52,3 |
| Richtung b | 368 | 103 | 13,7 | 33,1 | 47,4 | 59,7 | 70,7 |
| diagonal | 332 | 95 | 11,8 | 27,9 | 41,8 | 53,8 | 65,0 |

Sollen die erfindungsgemäßen Materialien in einem weiten Temperaturbereich einsetzbar sein, beispielsweise zwischen -10 und +50 °C, können an sich bekannte Weichmacher, beispielsweise Phtalsäureester, Adipate usw., zugesetzt werden, um ein Verspröden bei tiefen Temperaturen zu verhindern. Um eine Mikration der meist öligen Weichmacher zu inhibieren, ist es ferner möglich, diese mit dem Synthesematerial zu vernetzen oder sie teilweise zu kondensieren.

## Patentansprüche

1. Mehrlagiger Verbundstoff, umfassend eine erste, äußerste Schicht (1) aus einem Kunststoff, darunter eine zweite Schicht (2) aus einem für die Formbeständigkeit und Reißfestigkeit verantwortlichen Textil und gegebenenfalls eine dritte, unterste Schicht (3), ebenfalls aus einem Textil, dadurch gekennzeichnet, daß die zweite Schicht (2) ein Spinnfaservlies ist, dessen Faserlagen in sich verfestigt sind und das nach allen Richtungen eine gleichmäßige Dehnung und Reißfestigkeit aufweist.

2. Verbundstoff gemäß Anspruch 1, dadurch gekennzeichnet, daß die zweite Schicht (2) durch Heißvulkanisation - ca. 140 °C - mit Latex verfestigt ist.

3. Verbundstoff nach Anspruch 1, dadurch gekennzeichnet, daß die zweite Schicht (2) durch Koagulation mit Latex oder Polyurethan verfestigt ist.

4. Verbundstoff gemäß Anspruch 1, dadurch gekennzeichnet, daß die zweite Schicht (2) eine Längs- und Querreißfestigkeit von 10 bis 1000 N/5 cm aufweist und aus Fasern von Polyester, Viskosepolyester, Polyamid oder deren Copolymeren mit anderen Kunststoffen besteht.

5. Verbundstoff gemäß Anspruch 1, dadurch gekennzeichnet, daß auf die Oberseite und/oder Unterseite der zweiten Schicht (2) eine Schicht aus Stapelfasern aufgenadelt ist.

6. Verbundstoff gemäß Anspruch 1, dadurch gekennzeichnet, daß die zweite Schicht (2) hydrophobiert ist und daß das Hydrophobierungsmittel aus Aluminium- oder Zirkoniumsalzen, höheren Fettsäuren, fettsäuremodifizierten Melaminen sowie bevorzugt Siliconen, Fluorsiliconen oder Fluorcarbonharzen besteht.

7. Verbundstoff gemäß Anspruch 1, dadurch gekennzeichnet, daß eine unterste Schicht (3) aus einem Stapelfaservliesmaterial vorgesehen ist.

8. Verbundstoff gemäß Anspruch 7, dadurch gekennzeichnet, daß die unterste Schicht (3) aus Mikrofaservliesstoffen, koagulierten Vliesstoffen, poromerischen Vliesstoffen, Polyestervliesstoffen, Polyamidvliesstoffen, Filzen, Lederfaserstoffen, Glasfaservliesstoffen oder Synthesekeramikfaservlies besteht.

9. Verbundstoff gemäß Anspruch 7 oder 8, dadurch gekennzeichnet, daß die zweite Schicht (2) mit der untersten Schicht (3) durch einen Schmelzkleber verbunden ist.

10. Verbundstoff gemäß Anspruch 7, dadurch gekennzeichnet, daß die innerste Schicht (3) hydrophobiert ist und daß das Hydrophobierungsmittel aus Aluminium- oder Zirkoniumsalzen, höheren Fettsäuren, fettsäuremodifizierten Melaminen sowie bevorzugt Siliconen, Fluorsiliconen oder Fluorcarbonharzen besteht.

11. Verwendung eines Verbundstoffes (1, 2, 3) nach den Ansprüchen 1 bis 10 mit einer abriebfesten Kunststoffschicht (1) aus Polyurethan, Silikonkautschuk, Polyvinylchlorid, Polyethylen, Polypropylen, Polyacrylat oder aus Gummi-Latex zur Herstellung der Hülle von Sportbällen.

12. Verwendung eines Verbundstoffes (1, 2, 3) nach den Ansprüchen 1 bis 10 zur Herstellung von Schuhen, insbesondere von Schuhobermaterial.

## Claims

1. A multilayer composite material comprising a first outermost layer (1) of a plastics material, thereunder a second layer (2) of a textile responsible for dimensional stability and tear resistance, and optionally a third lowermost layer (3) also consisting of a textile, characterised in that the second layer (2) is a spun non-woven fabric, the fibre layers of which are inherently bonded and which in all directions exhibits uniform expansion and tear resistance.

2. A composite material according to Claim 1, characterised in that the second layer (2) is bonded with latex by hot vulcanisation - at about 140°C.

3. A composite material according to Claim 1, characterised in that the second layer (2) is bonded by coagulation with latex or polyurethane.

4. A composite material according to Claim 1, characterised in that the second layer (2) has a linear and transverse tear resistance of 10 to 1000 N/5 cm and consists of fibres of polyester, viscose polyester, polyamide or copolymers thereof with other plastics materials.

5. A composite material according to Claim 1, characterised in that a layer of staple fibres is needle-punched to the upper side and/or underside of the second layer (2).

6. A composite material according to Claim 1, characterised in that the second layer (2) has a water-repellent finish, and in that the water-repellent agent consists of aluminium or zirconium salts, higher fatty acids, melamines modified with fatty acids and preferred silicones, fluorosilicones or fluorocarbon resins.

7. A composite material according to Claim 1, characterised in that a lowermost layer (3) of a staple fibre non-woven fabric material is provided.

8. A composite material according to Claim 7, characterised in that the lowermost layer (3) consists of microfibre non-woven fabrics, coagulated non-woven fabrics, poromeric non-woven fabrics, polyester non-woven fabrics, polyamide non-woven fabrics, felts, fibrous leather materials, glass fibre non-woven fabrics or synthetic ceramic non-woven fabric.

9. A composite material according to Claim 7 or 8, characterised in that the second layer (2) is joined to the lowermost layer (3) by a hot-melt adhesive.

10. A composite material according to Claim 7, characterised in that the innermost layer (3) has a water-repellent finish, and in that the water-repellent agent consists of aluminium or zirconium salts, higher fatty acids, melamines modified with fatty acids and preferred silicones, fluorosilicones or fluorocarbon resins.

11. Use of a composite material (1,2,3) according to Claims 1 to 10 with a wear-resistant layer (1) of plastics material (1) of polyurethane, silicone rubber, polyvinyl chloride, polyethylene, polypropylene, polyacrylate or of latex rubber for the production of the covers of sports balls.

12. Use of a composite material (1,2,3) according to Claims 1 to 10 for the production of shoes, in particular of shoe upper material.

## Revendications

1. Matériau composite multicouches comprenant une première couche (1) la plus à l'extérieur, faite d'une matière plastique, sous celle-ci une deuxième couche (2) faite d'un textile assurant la stabilité de forme et la résistance à la déchirure, et, le cas échéant, une troisième couche (3) la plus inférieure également faite d'un textile, caractérisé en ce que la deuxième couche (2) est un non-tissé de fibres textiles dont les couches de fibres sont stabilisées en elles-mêmes et qui présente un allongement et une résistance à la déchirure uniformes dans toutes les directions.

2. Matériau composite selon la revendication 1, caractérisé en ce que la deuxième couche (2) est stabilisée par vulcanisation à chaud à environ 140°C avec du latex.

3. Matériau composite selon la revendication 1, caractérisé en ce que la deuxième couche (2) est stabilisée par coagulation avec du latex ou du polyuréthane.

4. Matériau composite selon la revendication 1, caractérisé en ce que la deuxième couche (2) présente une résistance à la déchirure longitudinale et transversale de 10 à 1000 N/5 cm et se compose de fibres de polyester, de polyester viscose, de polyamide, ou de copolymères de ceux-ci avec d'autres matières plastiques.

5. Matériau composite selon la revendication 1, caractérisé en ce qu'une couche de fibres textiles coupées est aiguilletée sur la face supérieure et/ou sur la face inférieure de la deuxième couche (2).

6. Matériau composite selon la revendication 1, caractérisé en ce que la deuxième couche (2) est imperméabilisée et en ce que l'agent imperméabilisant se compose de sels d'aluminium ou de zirconium, d'acides gras supérieurs, de mélamines modifiées par des acides gras ainsi que, de préférence, de silicones, de fluorosilicones ou de résines fluorocarbonées.

7. Matériau composite selon la revendication 1, caractérisé en ce qu'on prévoit une couche la plus inférieure (3) faite d'un matériau en non-tissé de fibres artifcielles synthétiques.

8. Matériau composite selon la revendication 7, caractérisé en ce que la couche la plus inférieure (3) se compose de non-tissés de microfibres, de non-tissés de fibres coagulées, de non-tissés de fibres poromères, de non-tissés de fibres de polyester, de non-tissés de fibres de polyamide, de feutres, de matériau en pâte de cuir, de non-tissés de fibres de verre ou de non-tissés de fibres céramiques de synthèse.

9. Matériau composite selon la revendication 7 ou la revendication 8, caractérisé en ce que la deuxième couche (2) est liée à la couche la plus inférieure (3) au moyen d'un adhésif fusible.

10. Matériau composite selon la revendication 7, caractérisé en ce que la couche la plus à l'intérieur (3) est imperméabilisée et en ce que l'agent imperméabilisant se compose de sels d'aluminium ou de zirconium, d'acides gras supérieurs, de mélamines modifiées par des acides gras ainsi que, de préférence, de silicones, de fluorosilicones ou de résines fluorocarbonées.

11. Utilisation d'un matériau composite (1, 2, 3) selon les revendications 1 à 10, comprenant une couche de plastique résistant à l'abrasion (1) en polyuréthane, caoutchouc silicone, polychlorure de vinyle, polyéthylène, polypropylène, polyacrylate ou latex de caoutchouc pour fabriquer l'enveloppe de balles de sport.

12. Utilisation d'un matériau composite (1, 2, 3) selon les revendications 1 à 10 pour fabriquer des chaussures, notamment des dessus de chaussures.
